# EUROPÄISCHE PATENTANMELDUNG

(11) **EP 4 834 513 A1**
(43) Veröffentlichungstag der Anmeldung: **04.11.2026**
(21) Anmeldenummer: 25173774.8
(22) Anmeldetag: 30.04.2025
(51) Int. Cl.: B23K 9/167, B23K 9/173, B23K 26/00, B23K 26/26, B23K 26/32, B23K 101/00, B23K 101/18, B23K 101/24, B23K 103/04

(54) **RAHMEN AUS EDELSTAHL UND VERFAHREN ZUM HERSTELLEN EINES RAHMENS AUS EDELSTAHL**

(71) Anmelder: voestalpine automotive Components Linz GmbH & Co KG, 4020 Linz (AT)
(72) Erfinder: Aigner, Stefan, 4263 Windhaag bei Freistadt (AT)
(74) Vertreter: Bratovic, Nino Maria

(57) **Zusammenfassung**

Die Erfindung schafft ein System und ein Verfahren zum Herstellen eines Rahmens (10) aus einem Edelstahl, sowie einen verbesserten Rahmen (10) selbst. Das Verfahren umfasst zumindest die Schritte:
Bereitstellen (S10) einer Anzahl von separaten Rahmenteilen (11-i) aus dem Edelstahl;
Verschweißen (S20) der separaten Rahmenteile (11-i) zu dem Rahmen (10) mit insgesamt mindestens zwei Schweißnähten (12-i), wobei das Verschweißen (S20) jeweils mittels eines thermischen Schweißverfahrens, insbesondere Laserschweißen, und jeweils von einer ersten flachen Seite (1) des im Herstellen begriffenen Rahmens (10) her erfolgt; und
Bearbeiten (S30) einer zweiten flachen Seite (2) des Rahmens (10), welche von der ersten flachen Seite (1) abgewandt ist,
wobei das Bearbeiten (S30) der zweiten flachen Seite (2) zumindest ein Schleifen (S31) des Rahmens (10) an der zweiten flachen Seite (2) und/oder ein Ausbilden (S32) mindestens einer optischen Schweißnaht-Tarnmarkierung (13-i) an einer Schweißwurzel (4) mindestens einer der Schweißnähte (12-i) umfasst.

## Beschreibung

### Technisches Gebiet

Die vorliegende Erfindung betrifft einen Rahmen aus einem Edelstahl, ein Verfahren zum Herstellen eines Rahmens aus einem Edelstahl, ein elektrisches Gerät mit einem solchen Rahmen, ein Automobil mit einem solchen Rahmen, sowie ein System zum Herstellen eines solchen Rahmens.

### Technischer Hintergrund

Edelstahl ist ein weit verbreiteter Werkstoff, der Widerstandsfähigkeit und Festigkeit mit einem wertigen und homogenen Aussehen verbindet. Er wird deswegen vielseitig eingesetzt, unter anderem zur Herstellung von verschiedenen Rahmen, etwa des umgebenden Rahmens eines GlaskeramicKochfelds.

Edelstahlelemente mit komplexen Geometrien, wie etwa auch eine Rahmengeometrie mit einem Fenster in der Mitte, werden häufig durch Fügen von einzelnen Elementen hergestellt. Dabei entstehen jedoch auffällige Schweißnähte, die insbesondere auf die Verbraucher unter Umständen wie Fehler oder Schmutz wirken und daher unerwünschte Folgen haben können. Etwas Analoges gilt für automatisierte Qualitätskontrollverfahren, die visuelle Bildverarbeitung etwa unter Verwendung von Künstlicher Intelligenz einsetzen.

Im Stand der Technik werden solche Rahmen, vor allem solche, die im vorgesehenen Einsatz für Verbraucher sichtbar sind, daher typischerweise aus einem Blech gestanzt. Dabei fällt jedoch beträchtlicher Abfall an, da etwa das ausgestanzte Fenster in der Regel für keine weitere Verwendung mehr geeignet ist.

### Zusammenfassung der Erfindung

Es ist daher eine Aufgabe der vorliegenden Erfindung, ein Verfahren zum Herstellen eines Rahmens aus einem Edelstahl bereitzustellen, welches kostengünstig ist, geringen Aufwand erfordert, wenig Materialabfall mit sich bringt, und gleichzeitig einen vielseitig einsetzbaren Rahmen erzeugt, insbesondere was dessen Stabilität und optische Eigenschaften angeht. Weitere Aufgaben der Erfindung sind es, Erzeugnisse bereitzustellen, welche einen solchen Rahmen vorteilhaft einsetzen, sowie ein System zum Herstellen eines solchen Rahmens bereitzustellen.

Diese Aufgaben werden durch die Gegenstände der unabhängigen Patentansprüche der vorliegenden Erfindung gelöst.

Dementsprechend wird, gemäß einem ersten Aspekt, ein Verfahren zum Herstellen eines Rahmens aus einem Edelstahl bereitgestellt, wobei das Verfahren zumindest die folgenden Schritte umfasst:
Bereitstellen einer Anzahl von separaten Rahmenteilen aus dem Edelstahl;
Verschweißen der separaten Rahmenteile zu dem Rahmen mit insgesamt mindestens zwei Schweißnähten, wobei das Verschweißen jeweils mittels eines thermisches Schweißverfahrens, insbesondere Laserschweißen, und jeweils von einer ersten flachen Seite des im Herstellen begriffenen Rahmens her erfolgt; und
Bearbeiten der ersten Flachen Seite und/oder einer zweiten flachen Seite des Rahmens, welche von der ersten flachen Seite abgewandt ist,
wobei das Bearbeiten zumindest ein Schleifen des Rahmens an der entsprechenden (d.h., der bearbeiteten) flachen Seite und/oder ein Ausbilden mindestens einer optischen (insbesondere visuellen) Schweißnaht-Tarnmarkierung an mindestens einer der Schweißnähte umfasst.

Unter Edelstahl soll hierin beispielsweise eine Stahllegierung verstanden werden, welche die folgenden Elemente in den folgenden Massenprozent-Anteilen x enthält, wobei der Rest von Eisen (Fe) ausgemacht wird:
Kohlenstoff (C): 0,01 < x < 0,5 m%
Chrom (Cr): 10,5 < x < 26 m%
Nickel (Ni): 0 < x < 26 m%
Molybdän (Mo): 0 < x < 8 m%
Titan (Ti): 0 < x < 0,8 m%
Kupfer (Cu): 0 < x < 4 m%
Mangan (Mn) 0 < x < 4 m%

Beispielsweise kann es sich bei dem Edelstahl um einen Edelstahl der Bezeichnung (Werkstoffgüte) 1.4016 (oder X6Cr17) gemäß DIN EN 10088 handeln. Dieser enthält, neben Eisen, max. 0,08 m% Kohlenstoff, max. 1,0 m% Mangan, max. 1,0 m% Silicium, max. 0,040 m% Phosphor, max. 0,030 m% Schwefel, und zwischen 16,0 m% und 18,0 m% Chrom. Insbesondere aufgrund des hohen Chromgehalts ist dieser Werkstoff besonders beständig gegen Spannungsrisskorrosion.

Der Rahmen selbst hat eine geschlossene geometrische Form mit mindestens einem umschlossenen Fenster, typischerweise in der Mitte. Der Rahmen kann dabei eben sein, kann aber auch dreidimensional geformt sein und beispielsweise Auskragungen aufweisen. Die "flachen Seiten" des Rahmens sind bei ebenen Ausführungen offensichtlich, und bei dreidimensional geformten Rahmen analog zu verstehen.

Bei dem thermischen Schweißverfahren kann es sich neben einem Laserschweißen auch um ein Schweißen mit nicht-abschmelzender Elektrode, etwa Wolfram-Inertgas-(WIG-)Schweißen, oder um ein Schweißen mit abschmelzender Elektrode, z.B. ein Metall-Inertgas-(MIG-)Schweißen oder ein Metall-Aktivgas-(MAG-)Schweißen handeln.

Bevorzugt wird es, wenn das Bearbeiten an der zweiten flachen Seite des Rahmens durchgeführt wird, d. h. die zweite flache Seite geschliffen wird und/oder mindestens eine optische (insbesondere visuelle) Schweißnaht-Tarnmarkierung an einer Schweißwurzel mindestens einer der Schweißnähte ausgebildet wird.

Die "zweite flache Seite" ist auch als "Oberseite" bezeichenbar, da sie diejenige Seite ist, welche bei dem fertiggestellten Rahmen dann vorzugsweise als Sichtseite vorgesehen ist. Sie weist nämlich besonders einheitliche optische Eigenschaften auf, insbesondere eine besonders geringe (oder sogar gar keine) Verformung oder Veränderung durch die Schweißnaht, die jeweils durch das Bearbeiten der zweiten flachen Seite noch verringert werden. Die "erste flache Seite" kann dementsprechend als "Unterseite" bezeichnet werden, da an ihr verfahrensgemäß die Schweißnahtoberseite angeordnet ist, welche optisch weniger einheitlich ausgebildet ist.

Dementsprechend befindet sich an der zweiten flachen Seite, oder Oberseite, die Schweißnahtwurzel, da zum ordentlichen Verschweißen der separaten Rahmenteile das Verschweißen jeweils über die gesamte Nahttiefe erfolgen muss, also von der ersten flachen Seite bis hin zur zweiten flachen Seite. Mit der "Schweißnahtwurzel" ist hierin insbesondere ein aufgrund des Verschweißens optisch gegenüber dem umliegenden Material veränderter Abschnitt an der zweiten flachen Seite und/oder ein an der zweiten flachen Seite erkennbarer Teil der Schweißnaht zu verstehen.

Im Folgenden wird immer wieder vorteilhaft von dem Bearbeiten der zweiten flachen Seite die Rede sein, da dies in vielen Varianten bevorzugt ist. Es versteht sich jedoch, dass auch ein Bearbeiten der ersten flachen Seite möglich ist; in diesem Fall kann dann die erste flache Seite als Oberseite, und die zweite flache Seite als Unterseite eingesetzt werden.

Bei der Schweißnaht-Tarnmarkierung handelt es sich insbesondere um irgendeine Art von Muster und/oder ein oder mehrere Symbole, welches oder welche jeweils dazu ausgebildet ist bzw. sind, das visuelle Erkennen der Schweißnaht an der bearbeiteten flachen Seite (bevorzugt an der zweiten flachen Seite, also von der Schweißnahtwurzel her) für einen durchschnittlichen Menschen und/oder eine maschinelle Bildverarbeitungsvorrichtung oder Bildverarbeitungssoftware zu erschweren. Als ein Beispiel für mehrere Symbole kann beispielsweise ein Text ein- oder mehrfach an, auf, oder über der Schweißnahtwurzel angebracht werden. Ein Beispiel für ein Symbol wäre etwa ein Logo oder ein Piktogramm. Jede Schweißnaht-Tarnmarkierung kann an jeder Schweißnaht (insbesondere an jeder Schweißwurzel) eine oder mehrere Wiederholungen des Musters und/oder des einen oder der mehreren Symbole aufweisen.

Die Schweißnaht-Tarnmarkierung, oder einzelne Muster oder Symbole davon, ist bzw. sind vorteilhaft teilweise direkt auf der Schweißnaht (insbesondere Schweißnahtwurzel) und teilweise seitlich davon, angebracht sodass etwa das menschliche Auge mit seinem Blick psychologisch-intuitiv die symbolische, oder musterhafte, Kontinuität der Schweißnaht-Tarnmarkierung verfolgt und infolgedessen die darunterliegende (leichte) Diskontinuität zwischen der Schweißnaht (insbesondere Schweißnahtwurzel) und dem umliegenden unveränderten Material übersieht, oder zumindest weniger (oder gar nicht mehr) bewusst wahrnimmt.

Etwas Ähnliches gilt für die visuelle Erfassung durch automatisierte Bildverarbeitungsmethoden, etwa unter Verwendung von maschinellem Lernen. Durch Maschinenlernmodelle genannt, (engl. "machine learning", beispielsweise künstliche neuronale Netze) werden häufig in vorgelagerten Schritten Filter angewendet, welche Kanten und einfache geometrische Muster erkennen. Eine unbearbeitete Schweißwurzel - wie im Stand der Technik - könnte somit durch das Maschinenlernmodell als hochrelevant charakterisiert werden und unter Umständen zu einer fälschlichen Erkennung einer vermeintlichen Fehlerstelle führen.

Das Hinzufügen von Schweißnaht-Tarnmarkierungen an den Schweißnähten (bevorzugt an den Schweißwurzeln) hat die vorteilhafte Folge, dass entsprechende Filter vorwiegend die Schweißnaht-Tarnmarkierungen erfassen, die im Vorfeld als "unbedenkliche optische Elemente" trainiert werden können. Im Gegensatz zu diesen wird dann die dahinter (oder daneben, oder beides) liegende Schweißnaht als weniger relevant charakterisiert. Häufig werden durch Maschinenlernmodelle auch erfasste Kanten hervorgehoben und deren Umgebung geglättet, sodass die Information über die Schweißnaht an sich gar nicht mehr an die nachfolgenden Prozesse (z.B. Schichten eines künstlichen neuralen Netzes) weitergegeben werden.

Das Schleifen des Rahmens an der zu bearbeitenden flachen Seite (insbesondere der zweiten flachen Seite) hat dieselbe Funktion, nämlich ein (für das visuelle Erfassen - also für das menschliche Auge oder für die künstliche Datenverarbeitung) Verwischen oder Überblenden der Grenzen zwischen der Schweißnahtwurzel und dem umliegenden, von dem Verschweißen unveränderten, Edelstahlmaterial.

Gemäß einigen bevorzugten Ausführungsformen, Varianten oder Verfeinerungen von Ausführungsformen ist es zumindest die zweite flache Seite, an welcher das Bearbeiten durchgeführt wird. Wie bereits erläutert wurde, weist diese besonders günstige Voraussetzungen auf, um durch das Bearbeiten die gewünschte optische oder visuelle Struktur zu erlangen.

Gemäß einigen bevorzugten Ausführungsformen, Varianten oder Verfeinerungen von Ausführungsformen erfolgt das Laserschweißen zumindest auch (oder ausschließlich) mit einem Laserstrahl oder einer Kombination von Laserstrahlen, bei dem oder bei denen eine entlang der Schweißnahtbreite der Schweißnähte unterschiedliche Intensitätsverteilung und/oder Wärmeeinwirkung erfolgt, und dies bevorzugt gleichzeitig und innerhalb des Laserstrahls oder der Kombination von Laserstrahlen, also beispielsweise mit einer Gauß-förmigen Verteilung oder einer stufigen Intensitätsverteilung.

Gemäß einigen bevorzugten Ausführungsformen, Varianten oder Verfeinerungen von Ausführungsformen ist eine durchschnittliche Flächenleistungsdichte des Laserstrahls oder der Kombination von Laserstrahlen in den inneren 30%, radial oder bezüglich der Breite betrachtet, mindestens um den Faktor 1,2 (d.h. 20%) höher als in den äußeren 30%, bevorzugt mindestens um den Faktor 1,3, besonders bevorzugt mindestens um den Faktor 6, mindestens um den Faktor 8, oder mindestens um den Faktor 10.

Gemäß einigen bevorzugten Ausführungsformen, Varianten oder Verfeinerungen von Ausführungsformen erfolgt das Laserschweißen der Rahmenteile mit einem Kern-Ring-Laser, mit einem Spot-im-Spot-Laser, oder mit einer sequentiellen Fahrt von zwei Lasern mit verschiedenen Fokusdurchmessern. Die unterschiedliche Intensitätsverteilungen und/oder Wärmeeinwirkung kann somit auch sequentiell erfolgen. Zum Beispiel kann - in beliebiger Reihenfolge oder auch gleichzeitig - ein erster Laserstrahl mit vergleichsweise engerem Fokusdurchmesser bis an die zweite flache Seite schweißen, und ein zweiter Laserstrahl mit vergleichsweise breiterem Fokusdurchmesser, oder breiterem Ringfokusdurchmesser, mit den von dem ersten Laserstrahl geschweißten oder noch zu schweißenden Bereichen in der Breite überlappen, aber weniger tief in die Rahmenteile hineinschweißen. Auf diese Weise wird eine gute Schweißverbindung bei gleichzeitig geringem Einfluss auf die zweite flache Seite des Rahmens erzielt.

Bei der Verwendung eines Kern-Ring-Lasers kann beispielsweise einen Innenfaser mit einem Durchmesser von zwischen 50 und 250 Mikrometern (z.B. 100 Mikrometer oder 200 Mikrometer) und eine Außenfaser mit einem Durchmesser von zwischen 350 und 750 Mikrometern (z.B. 400 Mikrometer oder 700 Mikrometer) verwendet werden, beispielsweise in der Kombination 700 Mikrometer außen, 200 Mikrometer innen, oder 400 Mikrometer außen, 100 Mikrometer innen. Eine Laserleistungsverteilung zwischen der Außenfaser und der Innenfaser kann vorteilhaft zwischen 50:50 und 70:40 liegen, beispielsweise bei 55:45 oder 65:35.

Gemäß einigen bevorzugten Ausführungsformen, Varianten oder Verfeinerungen von Ausführungsformen erfolgt das Ausbilden der mindestens einen optischen (insbesondere visuellen) Schweißnaht-Tarnmarkierung vorzugsweise jeweils an den Schweißwurzeln aller Schweißnähte, besonders bevorzugt jeweils über mindestens 80% einer Schweißwurzelbreite der jeweiligen Schweißwurzel. Mit der Schweißwurzelbreite ist hier insbesondere eine Breite der an der zweiten flachen Seite sichtbaren Schweißwurzel gemeint. Alternativ oder zusätzlich erfolgt das Ausbilden der mindestens einen Schweißnaht-Tarnmarkierung entlang mindestens 50%, besonders bevorzugt mindestens 75%, der Länge einer jeden Schweißwurzel.

Gemäß einigen bevorzugten Ausführungsformen, Varianten oder Verfeinerungen von Ausführungsformen erfolgt das Anbringen der optischen (insbesondere visuellen) Schweißnaht-Tarnmarkierungen durch eine Laserbeschriftungsmethode, bevorzugt durch Laserannealing oder Laserabtrag, auf der, insbesondere geschliffenen, zu bearbeitenden flachen Seite des Rahmens (insbesondere auf der zuvor geschliffenen zweiten flachen Seite). Hierfür kann somit vorteilhaft ein entsprechend eingerichteter Beschriftungslaser verwendet werden.

Gemäß einigen bevorzugten Ausführungsformen, Varianten oder Verfeinerungen von Ausführungsformen weisen die Rahmenteile jeweils zwei Schweißkanten auf, an denen sie mit jeweils anderen Rahmenteilen (insbesondere einem anderen Rahmenteil pro Schweißkante) durch die Schweißnähte zu verbinden sind. Die Schweißkanten sind jeweils als gerade Linien oder als Kurvenlinien ausgebildet. Gerade Linien sind leichter herzustellen und vereinfachen die Führung des für das Verschweißen verwendeten Schweißwerkzeugs; Kurvenlinien hingegen erzeugen Schweißnähte, die visuell, also vom menschlichen Auge oder einer Bilderkennungsvorrichtung die auf Basis menschlichen Sehens funktioniert, intrinsisch schwerer zu erkennen sind. Hierzu wird beispielsweise auf typische militärische Tarnkleidung verwiesen, bei der keine geraden Linien, sondern möglichst viele Kurvenlinien verwendet werden.

Bei rechtecksförmigen Rahmenteilen können die Schweißkanten vorteilhaft deren schmale Kanten, oder Endabschnitte an deren langen Kanten, oder beides sein.

Gemäß einigen bevorzugten Ausführungsformen, Varianten oder Verfeinerungen von Ausführungsformen umfasst das das Bereitstellen der Rahmenteile zumindest die Schritte:
- Abhaspeln eines Edelstahlbands von einer
   Edelstahlbandhaspel;
- Schneiden, insbesondere Laserschneiden, des abgehaspelten Edelstahlbands, um die Rahmenteile herzustellen.

Bevorzugt wird dabei zumindest ein Abschnitt des Edelstahlbands mit einem Materialnutzungsgrad von über 75%, insbesondere über 80%, bevorzugt über 90%, ausschließlich in eine Mehrzahl der Rahmenteile geschnitten. Besonders bevorzugt wird im Wesentlichen das gesamte Edelstahlband (optional mit Ausnahme von Anfangs- und Endstück) oder sogar ein endloses Edelstahlband mit einem der genannten Materialnutzungsgrade ausschließlich in die Mehrzahl der Rahmenteile geschnitten. Auf diese Weise ergibt sich ein besonders ressourcenschonendes Verfahren, vor allem im Vergleich zum Stand der Technik, wo vergleichbare Rahmen durch Stanzen hergestellt werden und daher in der Mitte des Rahmens, zur Herstellung des Fensters, beträchtlicher Materialabfall erzeugt wird.

Gemäß einigen bevorzugten Ausführungsformen, Varianten oder Verfeinerungen von Ausführungsformen weisen die zu einem herzustellenden Rahmen verwendeten separaten Rahmenteile insgesamt eine, zwei, drei, oder vier unterschiedliche Formen auf. Je weniger unterschiedliche Formen, desto einfacher wird die Lagerungslogistik, aber vor allem auch das Herstellungsverfahren.

Gemäß einigen bevorzugten Ausführungsformen, Varianten oder Verfeinerungen von Ausführungsformen umfasst das Verfahren ferner ein Aufspannen der separaten Rahmenteile in Form des herzustellenden Rahmens, wobei das Verschweißen an den aufgespannten separaten Rahmenteilen erfolgt. Das Aufspannen in Form des herzustellenden Rahmens kann beispielsweise auf einem Drehtisch erfolgen, und das Verschweißen kann sequentiell durch stets denselben Laser erfolgen.

Gemäß einem zweiten Aspekt stellt die Erfindung einen Rahmen aus Edelstahl bereit, umfassend eine Anzahl von separaten Rahmenteilen, die zu dem Rahmen an mindestens zwei Schweißnähten (bevorzugt zwei, drei, oder mehr, beispielsweise vier Schweißnähten) zusammengeschweißt sind, wobei die Schweißnähte alle an einer ersten flachen Seite des Rahmens angeordnet sind und alle Schweißwurzeln der Schweißnähte sich bis zu einer zweiten flachen Seite des Rahmens erstrecken, welche von der ersten flachen Seite abgewandt ist,
wobei die erste und/oder die zweite flache Seite geschliffen ist und/oder
wobei an mindestens einer Schweißnaht an der ersten und/oder zweiten flachen Seite mindestens eine optische (insbesondere visuelle) Schweißnaht-Tarnmarkierung ausgebildet ist.

Bevorzugt ist es die zweite flache Seite, die geschliffen ist und/oder die (vorzugsweise zuvor geschliffene) zweite flache Seite, an welcher die mindestens eine optische (insbesondere visuelle) Schweißnaht-Tarnmarkierung ausgebildet ist, d. h., die mindestens eine Schweißnaht-Tarnmarkierung ist bevorzugt an einer Schweißwurzel mindestens einer Schweißnaht an der zweiten flachen Seite ausgebildet.

Die erste flache Seite kann optional ebenfalls geschliffen sein, und ferner optional auch mindestens eine Schweißnaht-Tarnmarkierung aufweisen, etwa für Fälle, in denen beide flache Seiten an ihrem geplanten oder aktuellen Einsatzort als Sichtseiten fungieren.

Gemäß einem dritten Aspekt stellt die Erfindung ein elektrisches Gerät mit einem Rahmen gemäß einer Ausführungsform des zweiten Aspekts der vorliegenden Erfindung bereit, wobei diejenige flache Seite des Rahmens, welche geschliffen ist und/oder an welcher die mindestens eine Schweißnaht-Tarnmarkierung ausgebildet ist, als Sichtseite an einer im Gebrauch des Geräts sichtbaren Außenseite des Geräts angeordnet ist.

Bevorzugt ist es die zweite flache Seite, welche geschliffen ist und/oder an welcher die mindestens eine Schweißnaht-Tarnmarkierung ausgebildet ist, sodass in diesen Fällen dann auch die zweite flache Seite als Sichtseite an einer im Gebrauch des Geräts sichtbaren Außenseite des Geräts angeordnet ist.

Gemäß einigen bevorzugten Ausführungsformen, Varianten oder Verfeinerungen von Ausführungsformen handelt es sich bei dem elektrischen Gerät um einen Fernseher, um ein Kochfeld, welches durch den Rahmen eingerahmt ist, oder um ein Haushaltsgerät mit einem Garraum (etwa einen Backofen, eine Mikrowelle, einen Dampfgarer), bei dem der Rahmen als Frontrahmen fungiert, oder um ein anderweitiges Haushaltsgerät mit einer sichtbaren Komponente handeln, welche den Rahmen umfasst, beispielsweise um einen Dunstabzug. Der Rahmen kann auch als Blende für ein Haushaltsgerät vorgesehen sein.

Gemäß einem vierten Aspekt stellt die Erfindung ein Automobil mit einem Rahmen gemäß einer Ausführungsform des zweiten Aspekts der vorliegenden Erfindung bereit, wobei der Rahmen insbesondere als Dekorleiste und/oder als Kühlergrillrahmen eingesetzt (oder: angeordnet, oder: eingebaut) sein kann.

Gemäß einem fünften Aspekt stellt die Erfindung ein (insbesondere vollautomatisiertes) System zum Herstellen eines Rahmens bereit, umfassend:
eine Schneidevorrichtung (z.B. einen Schneidelaser), welche dazu eingerichtet ist, ein Metallband aus einem Edelstahl zu erhalten und daraus automatisiert eine Anzahl von separaten Rahmenteilen zu schneiden;
eine thermische Schweißvorrichtung (z.B. ein robotisiertes WIG-, MIG- oder MAG-Schweißgerät), welche dazu eingerichtet ist, die separaten Rahmenteile mit insgesamt mindestens zwei Schweißnähten automatisiert zu dem Rahmen zu verschweißen, wobei das Verschweißen jeweils von einer ersten flachen Seite des im Herstellen begriffenen Rahmens her erfolgt;
eine Bearbeitungsvorrichtung, welche dazu eingerichtet ist, automatisiert die erste flache Seite und/oder eine zweite flache Seite des Rahmens zu bearbeiten, welche von der ersten flachen Seite abgewandt ist,
wobei das Bearbeiten zumindest ein Schleifen des Rahmens an der entsprechenden flachen Seite mittels einer Schleifeinrichtung der Bearbeitungsvorrichtung und/oder ein Ausbilden mindestens einer optischen (insbesondere visuellen) Schweißnaht-Tarnmarkierung an mindestens einer der Schweißnähte mittels einer Laserbeschriftungseinrichtung der Bearbeitungsvorrichtung umfasst; und
Transportvorrichtungen zum automatisierten Transportieren der separaten Rahmenteile sowie des verschweißten Rahmens zumindest zwischen der Schneidevorrichtung, der Schweißvorrichtung, und der Bearbeitungsvorrichtung.

Bevorzugt ist es die zweite flache Seite, welche durch die Bearbeitungsvorrichtung geschliffen wird und/oder an welcher die mindestens eine Schweißnaht-Tarnmarkierung durch die Bearbeitungsvorrichtung ausgebildet wird.

Das erfindungsgemäße System eignet sich somit insbesondere zur Durchführung des Verfahrens gemäß einer Ausführungsform des ersten Aspekts der vorliegenden Erfindung oder zum Herstellen eines Rahmens gemäß einer Ausführungsform des zweiten Aspekts der vorliegenden Erfindung und kann daher gemäß allen in Bezug auf diese beschriebenen Optionen, Varianten, Ausführungsformen und Weiterentwicklungen angepasst werden und umgekehrt.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: eine schematische Darstellung eines Rahmens aus einem Edelstahl gemäß einer Ausführungsform der vorliegenden Erfindung;
- Fig. 2: einen Querschnitt durch eine Schweißnaht des Rahmens aus Fig. 1;
- Fig. 3: eine schematische Ansicht einer Schweißnaht des Rahmens aus Fig. 1 gemäß einer Variante;
- Fig. 4: eine schematische Ansicht einer Schweißnaht des Rahmens aus Fig. 1 gemäß einer weiteren Variante;
- Fig. 5: eine Variante für eine Schweißnaht des Rahmens aus Fig. 1;
- Fig. 6: eine weitere Variante für eine Schweißnaht des Rahmens aus Fig. 1;
- Fig. 7: eine Variante der geometrischen Form des Rahmens aus Fig. 1;
- Fig. 8: eine weitere Variante der geometrischen Form des Rahmens aus Fig. 1;
- Fig. 9: ein Haushaltsgerät gemäß einer Ausführungsform der vorliegenden Erfindung, hier speziell ein Glaskeramikkochfeld mit einem Edelstahlrahmen;
- Fig. 10: ein schematisches Flussdiagramm zur Erläuterung eines erfindungsgemäßen Verfahrens zum Herstellen eines Rahmens;
- Fig. 11: ein System gemäß einer weiteren Ausführungsform der vorliegenden Erfindung;
- Fig. 12: eine schematische Draufsicht auf einen in Herstellung befindlichen Rahmen gemäß Fig. 7 auf einem Spannrahmen einer Bearbeitungsvorrichtung gemäß einer Ausführungsform des erfindungsgemäßen Systems;
- Fig. 13: einen Querschnitt entlang der Linie X-X' durch die Darstellung in Fig. 12; und
- Fig. 14: einen Querschnitt entlang der Linie Y-Y' durch die Darstellung in Fig. 12.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

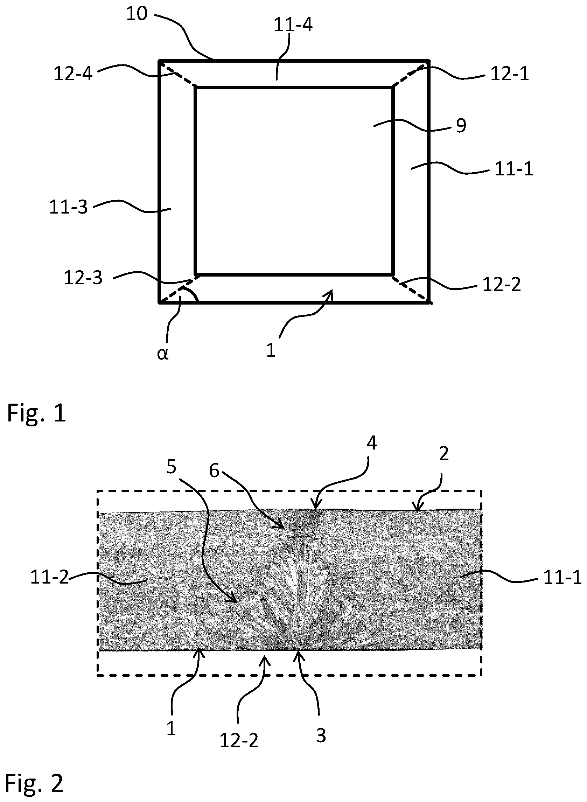

Fig. 1 zeigt eine schematische Darstellung eines Rahmens 10 aus einem Edelstahl gemäß einer Ausführungsform der vorliegenden Erfindung, und zwar in Aufsicht auf eine erste flache Seite 1 des Rahmens 10.

Der Rahmen 10 ist aus einer Mehrzahl von separaten Rahmenteilen 11-1, 11-2, 11-3, 11-4 (im Folgenden teilweise kollektiv als 11-i bezeichnet) zusammengeschweißt, hier also beispielsweise vier Rahmenteile 11-i, sodass eine Rahmenform mit einem Fenster 9 in der Mitte entstanden ist.

Die Rahmenform kann beliebig sein, ist aber vorteilhaft eine Rechtecksform, z.B. eine Quadratform. Je zwei benachbarte Rahmenteile 11-i berühren sich jeweils gegenseitig an einer jeweiligen Schweißkante, wo sie dann in einer jeweiligen Schweißnaht 12-1, 12-2, 12-3, 12-4 (im Folgenden teilweise kollektiv als 12-i bezeichnet) verschweißt wurden. Demnach wurde eine erste Schweißkante des Rahmenteils 11-1 mit einer ersten Schweißkante des Rahmenteils 11-2 in einer Schweißnaht 12-2 verschweißt, und so weiter, bis eine in sich geschlossene und starr verbundene Rahmenform entstanden ist.

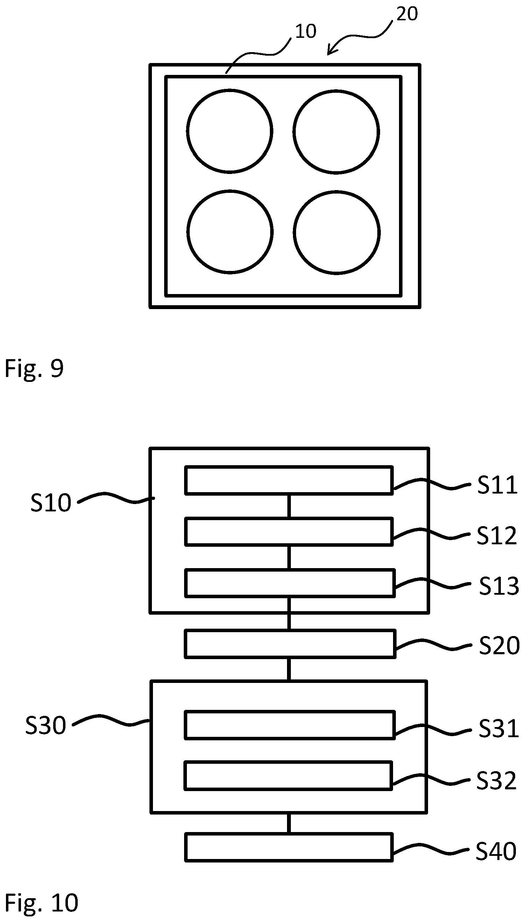

Die Rahmenteile 11-i können beliebige Formen annehmen; bevorzugt sind diese im Wesentlichen rechtecksförmig, wobei an den schmalen Kanten (oder angrenzend daran) die Schweißkanten angeordnet sind, die beispielsweise mit einem Winkel α gewinkelt zu den langen Kanten ausgebildet sein können. Für den Winkel α kann beispielsweise gelten 30°<α<60°, beispielsweise α=45°. Die Schweißkanten können aber auch als Kurvenlinien ausgebildet sein, wie im Folgenden noch näher erläutert werden wird. Die im wesentlichen rechtecksförmige Ausbildung der Rahmenteile 11-i ermöglicht das vorteilhafte Erzeugen der Rahmenteile 11-i durch entsprechendes Zuschneiden eines Edelstahlbands (siehe auch Fig. 10 und die zugehörige Beschreibung im Folgenden).

Fig. 2 zeigt einen exemplarischen Querschnitt durch diese Schweißnaht 12-2 im Detail, wobei die erste flache Seite 1 (oder: Unterseite) des Rahmens 10 unten dargestellt ist, und eine dazu parallele und von der ersten flachen Seite 1 abgewandte zweite flache Seite 2 (oder: Oberseite) des Rahmens 10 entsprechend oben dargestellt ist.

Die Schweißnähte 12-i erstrecken sich von der ersten flachen Seite 1 aus bis an die zweite flache Seite 2. Der Rahmen 10 ist somit derart hergestellt, dass sich Schweißnahtoberseiten 3 aller Schweißnähte 12-i alle an der ersten flachen Seite 1 (oder: Unterseite) des Rahmens 10 befinden, und Schweißwurzeln 4 aller Schweißnähte 12-i an der zweiten flachen Seite 2 befinden. Fig. 2 illustriert sehr deutlich, dass die Erstreckung der Schweißnähte 12-i an der ersten flachen Seite 1 deutlich größer ist, und damit auch deren optischer Einfluss auf das Erscheinungsbild des Rahmens 10 von der ersten flachen Seite 1 her gesehen, als es an der zweiten flachen Seite 2 der Fall ist.

Bei der zunächst besprochenen Ausführungsform ist der Rahmen 10 an der zweiten flachen Seite 2 zusätzlich behandelt, nämlich geschliffen, oder mit mindestens einer Schweißnaht-Tarnmarkierung versehen, oder beides. Typischerweise werden Schweißnähte 12-i im Stand der Technik lediglich an der Seite geschliffen, an der die Schweißnahtoberseiten 3 angeordnet sind. Obwohl dies bei der vorliegenden Erfindung ebenfalls geschehen kann, wird durch die Behandlung an der zweiten flachen Seite 2 des Rahmens 10 erzielt, dass diese zweite flache Seite 2 einen besonders homogenen optischen Eindruck erzielt, sodass diese vorzugsweise als Sichtseite verwendet werden kann.

Im Querschnitt zeigt sich die Schweißnaht 12-i als grob trichterförmig, mit einer an der ersten flachen Seite 1 anliegenden, dreiecksförmigen Trichterkopfstruktur 5 und einer daran angrenzenden, sich bis zur zweiten flachen Seite 2 erstreckenden, schmäleren rechtecksförmigen Trichterhalsstruktur 6. Vorteilhaft erfolgt das Schweißen der Schweißnaht 12-i derart, dass diese Trichterhalsstruktur 6 ausgebildet wird, d.h., dass sich die Trichterkopfstruktur 5 nicht bis hin zu der zweiten flachen Seite 2 erstreckt. Dies kann beispielsweise dadurch unterstützt werden, dass während des Schweißens der herzustellende Rahmen an der zweiten flachen Seite 2 gekühlt wird, etwa durch Auflage auf einem gut wärmeleitenden Medium und/oder Zuführung eines Kühlmittels und/oder dergleichen mehr.

Das optionale Schleifen der zweiten flachen Seite 2 erfolgt vorteilhaft nur so weit, dass höchstens die Trichterhalsstruktur 6 entfernt wird, aber kein Teil der Trichterkopfstruktur 5.

Wie bereits erwähnt wurde, ist die Behandlung des Rahmens 10 insbesondere an der zweiten flachen Seite 2 vorteilhaft, da, wie anhand von Fig. 2 deutlich ersichtlich ist, die optische Homogenität der zweiten flachen Seite 2 besonders hoch ist und der optische Einfluss der Schweißnähte 12-i besonders klein ist.

Es versteht sich jedoch, dass alternativ oder zusätzlich auch ein Behandeln der ersten flachen Seite 1 erfolgen kann. Im Folgenden wird vornehmlich der Fall besprochen werden, dass es die zweite flache Seite 2 ist, welche bearbeitet (also insbesondere geschliffen und/oder mit mindestens einer Schweißnaht-Tarnmarkierung versehen) wird, jedoch können alle beschriebenen Varianten, Optionen, Merkmale und Verfahrensschritte stets auch immer bezüglich der ersten flachen Seite 1 statt bezüglich der zweiten flachen Seite 2 ausgebildet oder durchgeführt werden, und umgekehrt.

Eine beidseitige Behandlung (also beidseitiges Schleifen, beidseitiges Ausbilden von Schweißnaht-Tarnmarkierungen 13-i, oder Schleifen an einer flachen Seite 1, 2 und Ausbilden von Schweißnaht-Tarnmarkierungen 13-i an der jeweils anderen flachen Seite 2, 1, in beiden Varianten) kann vorteilhaft sein, falls der fertige Rahmen 10 für einen Einsatz vorgesehen ist, in welchem beide flachen Seiten 1, 2 zumindest jeweils teilweise als eine Sichtseite fungieren, d. h. für Benutzer sichtbar sind.

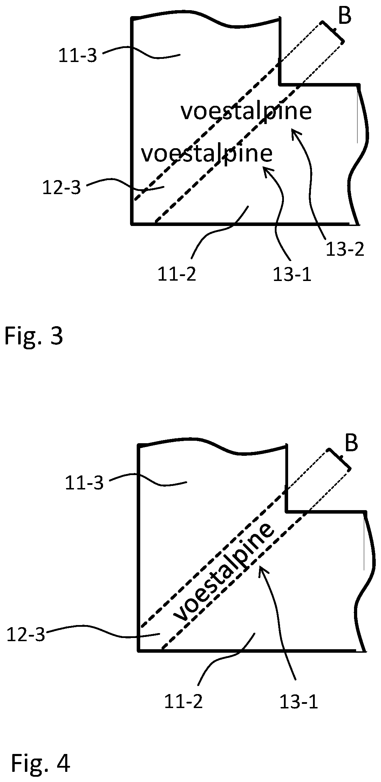

Fig. 3 erläutert das Anbringen von optischen, insbesondere visuellen, Schweißnaht-Tarnmarkierungen 13-1, 13-2 (im Folgenden teilweise kollektiv als 13-i bezeichnet) exemplarisch an der Schweißnaht 12-3, die hier nicht maßstabsgetreu dargestellt ist.

In dem gezeigten Beispiel werden als visuelle Schweißnaht-Tarnmarkierungen 13-i jeweils der - für das menschliche Auge sichtbare - Schriftzug "voestalpine" (eingetragene Marke) verwendet, wobei hier beispielsweise zwei solcher Schweißnaht-Tarnmarkierungen 13-i verwendet werden, die jeweils die gesamte Schweißwurzelbreite B der Schweißwurzel 4 der Schweißnaht 12-i überspannen und diese an beiden Seiten überragen. Auf diese Weise wird das durch die Schweißnaht 12-i (genauer gesagt: durch deren Schweißwurzel 4) an der zweiten flachen Seite 2 gebildete Muster durch die Schweißnaht-Tarnmarkierungen 13-i durchbrochen und teilweise getarnt. Dadurch kann die Materialbeschaffenheit an der zweiten flachen Seite 2 homogener wirken.

Die Schweißnaht-Tarnmarkierung 13-i oder Schweißnaht-Tarnmarkierungen 13-i können beispielsweise durch eine Laserbeschriftungsmethode angebracht werden, siehe auch im Nachfolgenden Fig. 10 und die zugehörige Beschreibung. Insbesondere kann das Anbringen der Schweißnaht-Tarnmarkierungen 13-i auch nach dem Schleifen der zweiten flachen Seite 2 erfolgen, um den gegenseitigen Effekt noch zu verstärken.

In Fig. 4 ist eine alternative Anbringung einer Schweißnaht-Tarnmarkierung 13-i gezeigt, nämlich eine Anbringung desselben Schriftzugs, jedoch längs der Schweißnaht 12-3, wobei sich die Schweißnaht-Tarnmarkierung 13-i vorzugsweise über mindestens 50%, besonders bevorzugt über mindestens 65%, insbesondere über mehr als 80% der Schweißwurzelbreite B der Schweißwurzel 4 der Schweißnaht 12-3 erstreckt. Es versteht sich, dass statt des gezeigten Schriftzugs vielfältige andere Schriftzüge oder Symbole verwendet werden können. Die Schweißwurzelbreite B ist in Fig. 3 und Fig. 4 übertrieben groß dargestellt. Entsprechende Schriftzüge können auch wiederholt hintereinander entlang der Schweißwurzel 4 und auf der Schweißwurzel 4 angeordnet sein.

Wie bereits erwähnt, können Schweißnaht-Tarnmarkierungen 13-i alternativ oder zusätzlich zu an der Schweißwurzel 4 auch an der Schweißnahtoberseite 3 ausgebildet oder angebracht werden, wobei analog dasselbe gilt wie mit Bezug auf die Schweißwurzel 4 beschrieben wurde oder wird.

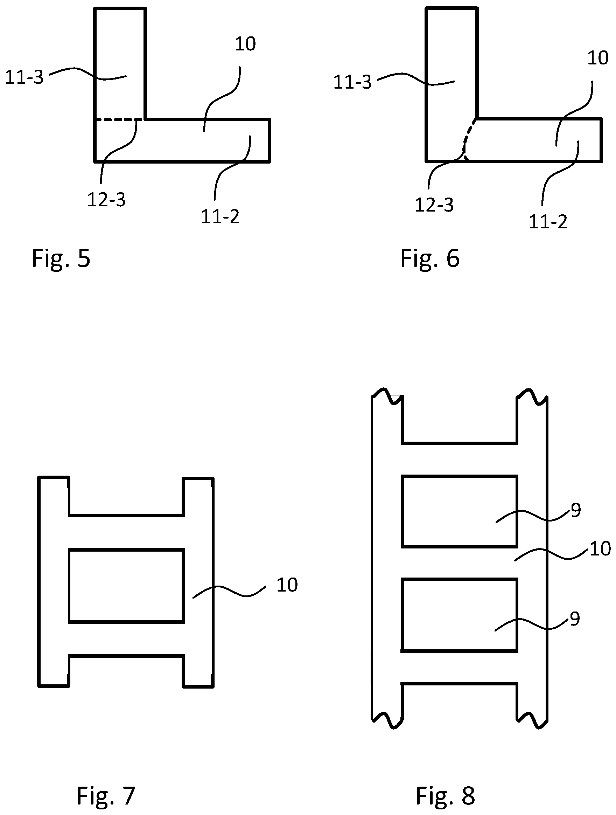

Fig. 5 und Fig. 6 zeigen verschiedene Varianten, wie die Rahmenteile 11-i insbesondere bezüglich ihrer Schweißkanten ausgebildet werden können und dementsprechend auch, wie die Schweißnähe 12-i geometrisch ausgebildet sein können.

Während in Fig. 1, Fig. 3 und Fig. 4 die Schweißkanten jeweils im Winkel α=45° zu den langen Achsen der Rechtecksform der Rahmenteile 11-i ausgebildet waren, sind die Rahmenteile 11-i in Fig. 5 vollständig rechtecksförmig (d.h. α=90°). Die Schweißkante eines Rahmenteils (hier 11-3) wird durch dessen schmale Kante gebildet, während bei dem angrenzenden Rahmenteil (hier 11-2) ein an die schmale Seite angrenzender Endabschnitt der langen Kante als Schweißkante fungiert. Die Schweißnaht 12-3 ist hier also ebenfalls als gerade Linie ausgebildet, wie auch die in Fig. 1, Fig. 3, und Fig. 4. Selbstverständlich könnte bei der gezeigten Schweißnaht 12-3 auch die schmale Kante des Rahmenteils 11-2 und ein Teil der langen Kante des Rahmenteils 11-3 jeweils als Schweißnaht verwendet werden.

Bei der in Fig. 1 gezeigten Variante könnten im Falle einer insgesamt quadratischen Form des Rahmens 10 vorteilhaft alle Rahmenteile 11-i dieselbe Form aufweisen, also deckungsgleich hergestellt sein. Bei einer nicht-quadratischen Rechtecksform können es beispielsweise genau zwei unterschiedliche Formen von Rahmenteilen 11-i sein.

Bei der in Fig. 5 gezeigten Variante kann es wieder nur eine Form für alle Rahmenteile 11-i sein (wenn jedes Rahmenteil 11-i an einer Seite an seiner schmalen Kante, und an seiner anderen Seite an dem Endabschnitt einer langen Kante verschweißt wird), oder es können zwei verschiedene Formen vorliegen, etwa eine (im Vergleich) kürzere Rechtecksform für die Rahmenteile 11-1 und 11-3, und eine (im Vergleich) längere Rechtecksform für die Rahmenteile 11-2 und 11-4.

Fig. 6 zeigt eine Variante, bei der die Schweißkanten als Kurvenlinien ausgebildet sind. Bei dem Rahmenteil 11-2 ist hier die gezeigte schmale Kante als Kurvenlinie ausgebildet, bei dem Rahmenteil 11-3 ein Endabschnitt einer der langen Kanten, wobei die beiden Kurvenlinien deckungsgleich sind, sodass sie genau aneinander anliegen und auch die beim Verschweißen erzeugte Schweißnaht 12-3 die entsprechende Kurvenlinie aufweist. Solche Kurvenlinien sind visuell an sich bereits schwerer zu erfassen als gerade Linien, sodass dies umso mehr nach dem Schleifen und/oder dem Versehen mit mindestens einer Schweißnaht-Tarnmarkierung 13-i gilt.

Auch bei der in Fig. 6 gezeigten Variante können alle Rahmenteile 11-i identisch ausgebildet sein. Alle beschriebenen Varianten für Schweißkanten können auch kombiniert werden, auch bei ein und demselben Rahmen 10.

Fig. 7 zeigt eine Variante eines fertiggestellten Rahmens 10 mit einer anderen geometrischen Rahmenform als die in Fig. 1 gezeigte.

Wie bereits erläutert wurde, kann der erfindungsgemäße Rahmen 10 vorteilhaft derart in einem Gerät eingesetzt oder eingebaut werden, dass seine bearbeitete zweite flache Seite 2 als Sichtseite an einer im Gebrauch des Geräts sichtbaren Außenseite des Geräts angeordnet ist. Der Rahmen 10 mit der in Fig. 7 gezeigten Form kann beispielsweise vorne in einem Backofen angeordnet sein, als erstes sichtbares Element nach dem Öffnen der Backofentür.

Fig. 9 zeigt eine weitere Variante eines fertiggestellten Rahmens 10 mit wiederum einer anderen Form, hier einer Form mit mehreren Fenstern 9. Gezeigt ist eine leiterartige Struktur mit drei Sprossen und zwei dazwischenliegenden Fenstern 9. Es versteht sich jedoch, dass auch eine Leiterstruktur mit mehr als drei Sprossen und/oder mehr als zwei Fenstern 9 vorgesehen sein kann. Solche Rahmen 10 können beispielsweise als Dekorationselemente im Hausbau oder im Automobilbau verwendet werden.

Fig. 9 zeigt, wie beispielsweise der Rahmen 10 als Edelstahlrahmen eines Glaskeramikkochfelds 20 gemäß einer Ausführungsform der vorliegenden Erfindung verwendet werden kann, wobei die zweite flache Seite 2 als für einen Benutzer sichtbare Seite des Glaskeramikkochfelds 20 verbleibt, und das Glaskeramikkochfeld 20 in das zuvor bestehende Fenster 9 des Rahmens 10 eingesetzt ist.

Es versteht sich, dass der erfindungsgemäße Rahmen 10 auch in vielen anderen Funktionen verwendet werden kann, etwa als Schmuckbilderrahmen, als Rahmen eines Fernsehers, oder als Rahmen eines Haushaltsgeräts beispielsweise mit einem Garraum werden. Bei dem Haushaltsgerät kann es sich allgemein um ein Küchengerät handeln, beispielsweise auch um ein Küchengerät ohne einen Garraum, etwa einen Dunstabzug. Der Rahmen 10 kann auch als Teil oder als Umrandung mindestens eines Bedienelements vorgesehen sein. In einem Automobil kann der erfindungsgemäße Rahmen 10 in einer Dekorleiste, als Kühlergrillrahmen oder dergleichen eingesetzt werden.

Fig. 10 zeigt ein schematisches Flussdiagramm zur Erläuterung eines Verfahrens zum Herstellen eines Rahmens 10 aus einem Edelstahl, gemäß einer weiteren Ausführungsform der vorliegenden Erfindung. Das Verfahren gemäß Fig. 10 ist insbesondere zum Herstellen des Rahmens 10 gemäß einer der Fig. 1-9 geeignet. Dementsprechend kann das Verfahren gemäß allen mit Bezug auf den Rahmen 10 beschriebenen Optionen, Varianten, Ausführungsformen und Weiterentwicklungen angepasst werden, und umgekehrt.

In einem Schritt S10 wird eine Anzahl N von separaten Rahmenteilen 11-i aus einem Edelstahl bereitgestellt, beispielsweise zwei, drei, oder vier Rahmenteile 11-i. Auch mehr Rahmenteile 11-i sind möglich, jedoch ergibt sich bei der Anzahl von N Rahmenteilen 11-i typischerweise dieselbe Anzahl N von Schweißnähten 12-i, um eine geschlossene Rahmenform zu erzeugen, und generell trachtet die vorliegende Erfindung danach, das Ausmaß und den optischen Einfluss von Schweißnähten insbesondere an einer Sichtfläche des Rahmens 10 möglichst gering zu halten, sodass kleinere Zahlen von Rahmenteilen 11-i bevorzugt sind.

Das Bereitstellen S10 der Rahmenteile 11-i kann optional als (Teil-)Schritte ein Abhaspeln S11 eines Edelstahlbands von einer Edelstahlbandhaspel sowie ein Schneiden S12, insbesondere Laserschneiden, des abgehaspelten Edelstahlbands mittels einer Schneidevorrichtung, umfassen, um die Rahmenteile 11-i herzustellen. Vorzugsweise wird das Edelstahlband (bei dem es sich auch um ein Endlosband handeln kann) mit einem Materialnutzungsgrad von über 75%, insbesondere über 80%, bevorzugt über 90%, ausschließlich in eine Mehrzahl der Rahmenteile geschnitten.

Die Schneidevorrichtung, also beispielsweise ein Schneidelaser, ist derart eingerichtet, dass sie die Rahmenteile so schneidet, dass deren Schnittkanten danach (optional nach weiteren Schritten wie z.B. einem Entgraten und/oder Schleifen) als Schweißkanten fungieren können. Demnach kann die Schneidevorrichtung so eingerichtet sein, dass sie Schnittkanten gemäß einer der im Vorangehenden beschriebenen Varianten erzeugt, insbesondere geradlinige Schnittkanten (siehe Fig. 1 und Fig. 3-5) oder als Kurvenlinien ausgebildete Schnittkanten (siehe Fig. 6).

In einem Schritt S20 werden die die separaten Rahmenteile 11-i zu dem Rahmen 10 mit insgesamt mindestens zwei Schweißnähten 12-i (typischerweise N Schweißnähten 12-i) verschweißt. Das Verschweißen S20 erfolgt jeweils mittels eines thermischen Schweißverfahrens, insbesondere Laserschweißen, und jeweils von der ersten flachen Seite 1 des im Herstellen begriffenen Rahmens 10 her, wie im Vorangehenden bereits vor allem mit Bezug auf Fig. 1 und Fig. 2 erläutert wurde. In Fig. 2 würde also das Verschweißen von unten her erfolgen.

Das Verschweißen S20 erfolgt bevorzugt zumindest auch mit einem Laserstrahl oder einer Kombination von Laserstrahlen, bei dem oder bei denen eine entlang der Schweißnahtbreite der Schweißnähte 12-i unterschiedliche Intensitätsverteilung und/oder Wärmeeinwirkung erfolgt. Dabei kann etwa eine Flächenleistungsdichte des Laserstrahls oder der Kombination von Laserstrahlen im Zentrum mindestens 20% höher sein als im Randbereich.

Hierzu kann das Verschweißen S20 (in diesem Fall also konkret ein Laserschweißen) vorteilhaft mit einem Kern-Ring-Laser, mit einem Spot-im-Spot-Laser, oder mit einer sequentiellen Fahrt von zwei Lasern mit verschiedenen Fokusdurchmessern erfolgen.

Dadurch kann vorteilhaft die in Fig. 2 gezeigte Struktur der Schweißnaht 12-i erzielt werden, die im Querschnitt die dargestellte Trichterstruktur mit einer Trichterkopfstruktur 5 an der ersten flachen Seite 1 und einer Trichterhalsstruktur 6 an der zweiten flachen Seite 2 aufweist.

Typischerweise wird dabei die Trichterhalsstruktur 6 durch einen inneren und/oder leistungsstärkeren Laserstrahl (z.B. den inneren Spot beim Spot-im-Spot-Laser oder den Kernlaser beim Kern-Ring-Laser oder einen Laser mit vergleichsweise höherer Intensität bei der sequentiellen Fahrt zweier Laser) erzeugt, während die Trichterkopfstruktur 5 typischerweise durch einen äußeren und/oder leistungsschwächeren Laserstrahl (z.B. den äußeren Spot im Spot-im-Spot-Laser oder den Ringlaser beim Kern-Ring-Laser oder einen Laser mit vergleichsweise niedrigerer Intensität bei der sequentiellen Fahrt zweier Laser) erzeugt.

Das Bereitstellen S10 der separaten Rahmenteile 11-i kann ein Aufspannen S13 der separaten Rahmenteile 11-i in Form des herzustellenden Rahmens 10 umfassen, wobei das Verschweißen S20 dann vorteilhaft an den aufgespannten separaten Rahmenteilen 11-i erfolgen kann.

In einem Schritt S30 erfolgt, bevorzugt nachdem alle Schweißnähte 12-i fertiggestellt wurden, ein Bearbeiten der ersten flachen Seite 1 und/oder der zweiten flachen Seite 2 des Rahmens 10, welche von der ersten flachen Seite 1 abgewandt ist, also in Fig. 2 der oben dargestellten Seite. Das Bearbeiten S30 der zweiten flachen Seite 2 ist bevorzugt, es kann jedoch alternativ oder zusätzlich auch die erste flache Seite 1 bearbeitet werden.

Das Bearbeiten S30 (bevorzugt der zweiten flachen Seite 2, oder: Oberseite, oder: Sichtseite) des Rahmens 10 umfasst zumindest ein Schleifen S31 des Rahmens 10 an der entsprechenden flachen Seite 1, 2 und/oder ein Ausbilden S32 mindestens einer optischen, insbesondere visuellen, Schweißnaht-Tarnmarkierung 13-i an mindestens einer der Schweißnähte 12-i, bevorzugt an mindestens einer Schweißwurzel 4 oder, besonders bevorzugt, an den Schweißwurzeln 4 aller Schweißnähte 12-i.

Das Ausbilden S32 der mindestens einen optischen Schweißnaht-Tarnmarkierung 13-i (bevorzugt mindestens einer optischen Schweißnaht-Tarnmarkierung 13-i pro Schweißnaht 12-i) kann beispielsweise mittels einer Laserbeschriftungsmethode, bevorzugt durch Laserannealing oder Laserabtrag, auf der entsprechenden, insbesondere zuvor geschliffenen, ersten und/oder zweiten flachen Seite 1, 2 des Rahmens 10 erfolgt. Somit kann zum Ausbilden S32 der mindestens einen Schweißnaht-Tarnmarkierung 13-i eine Laserbeschriftungsvorrichtung vorgesehen sein.

In einem Schritt S40 kann schließlich noch ein Folieren der bearbeiteten Rahmen 10 durchgeführt werden, etwa automatisiert mittels einer Folierungsmaschine.

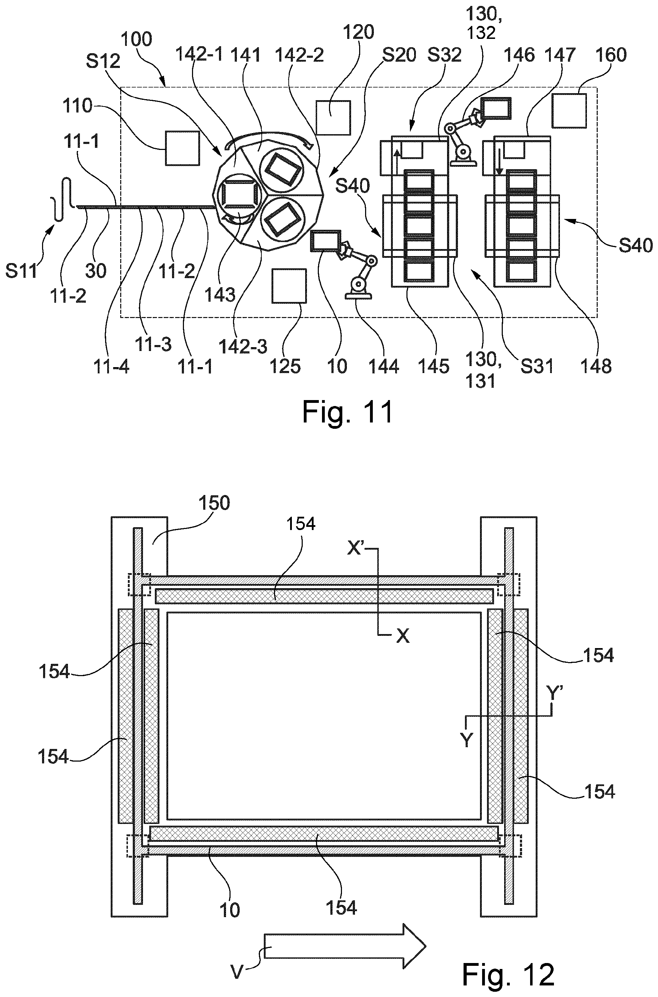

Fig. 11 zeigt ein System 100 gemäß einer weiteren Ausführungsform der vorliegenden Erfindung, insbesondere ein System 100 zum Herstellen eines Rahmens 10. Das erfindungsgemäße System 100 eignet sich insbesondere zur Durchführung des Verfahrens gemäß Fig. 10 der vorliegenden Erfindung oder zum Herstellen eines Rahmens 10 gemäß einer der Fig. 1-9 und kann daher gemäß allen in Bezug auf diese beschriebenen Optionen, Varianten, Ausführungsformen und Weiterentwicklungen angepasst werden und umgekehrt.

Das System 100 ist vorteilhaft vollständig automatisiert (oder: vollautomatisiert). Alle Vorgänge in dem automatisierten System 100 können vorteilhaft durch eine Steuervorrichtung 160 des Systems gesteuert werden. Diese kann beispielsweise als eine beliebige Recheneinrichtung ausgebildet sein, also etwa ein Mikrocontroller, ein FPGA, eine ASIC, eine SPS, aber auch einen PC, ein Terminal, oder dergleichen. Die Steuervorrichtung 160 kann oder teilweise lokal und/oder entfernt angeordnet sein, also beispielsweise ganz oder teilweise durch eine auf einer Cloud-Computing-Plattform ausgeführte Software implementiert sein.

Das System 100 ist in der beispielhaft dargestellten Ausführungsform dazu eingerichtet, ein Edelstahlband 30 zu erhalten, beispielsweise von einer Fördereinrichtung. Das Edelstahlband 30 kann dazu beispielweise von einer Haspel abgehaspelt werden, wie im Vorangehenden mit Bezug auf den Schritt S11 beschrieben. Die Haspel, sowie die Vorrichtung zum Abhaspeln des Edelstahlbands 30 davon können ebenfalls Teil des Systems 100 sein.

In Fig. 11 ist in einer schematischen Draufsicht auf das Edelstahlband 30 dargestellt, wie die Rahmenteile 11-i eines nach dem anderen von dem Edelstahlband 30 abgeschnitten werden, wobei vorteilhaft ein Materialnutzungsgrund von 90% oder höher vorliegt. Dabei sind an dem Edelstahlband 30 unmittelbar ineinander übergehende Schweißkanten mit einem Winkel α=45° vorgesehen, wie mit Bezug auf Fig. 1, Fig. 3 und Fig. 4 gezeigt ist.

Zum Schneiden S12 umfasst das System 100 eine Schneidevorrichtung 110, welche dazu eingerichtet ist, das Metallband aus Edelstahl, also das Edelstahlband 30, zu erhalten und daraus automatisiert eine Anzahl von separaten Rahmenteilen 11-i zu schneiden. In der in Fig. 11 dargestellten Variante ist die Schneidevorrichtung 110 dazu eingerichtet, kontinuierlich die Rahmenteile 11-1, 11-2, 11-3, und 11-4, in dieser Reihenfolge, für einen ersten Rahmen 10 abzuschneiden, und danach für den nächsten Rahmen 10 wieder von vorne zu beginnen, und immer so weiter, wie gezeigt.

Die Schneidevorrichtung 110 kann einen robotergetragenen Schneidelaser (oder Laserschneider) umfassen, welcher dazu eingerichtet ist, die Rahmenteile 11-i nacheinander von dem Edelstahlband 30 abzuschneiden. Es können auch eine oder mehrere fest installierte Schneidelaser vorgesehen sein, welche nur entlang einer fest vorgegebenen Schneideebene jeweils eine Schneidekante erzeugen.

Wie in Fig. 11 ebenfalls dargestellt ist, kann das System 100 als eine erste Transportvorrichtung einen Drehtisch 141 umfassen, auf welchem wiederum einzelne Sektionen 142-1, 142-2, 142-3 (im Folgenden teilweise kollektiv als 142-i bezeichnet) vorgesehen sind. Durch Drehen des Drehtischs 141 werden die Sektionen 142-i nacheinander einzelnen Bearbeitungsstationen des Systems 100 zugeführt, wobei die erste Station die Schneidevorrichtung 110 darstellt.

Auf jeder Sektion 142-i ist vorteilhaft ein eigener Sektions-Drehtisch 143 angeordnet. Durch Drehen des Sektions-Drehtischs 143 während des Schneidens S12 können so die abgetrennten Rahmenteile 11-i separat voneinander angeordnet werden, sodass die Schnittebene der Schneidevorrichtung 110 beispielsweise gar nicht verändert zu werden braucht.

Als zweite Station, zu welcher jede Sektion 142-i nach der ersten Station geführt wird, ist an dem Drehtisch 141 eine thermische Schweißvorrichtung 120 angeordnet, welche dazu eingerichtet ist, die separaten Rahmenteile 11-i mit insgesamt mindestens zwei (hier: vier) Schweißnähten 12-i automatisiert zu dem Rahmen 10 zu verschweißen S20, wobei das Verschweißen S20 jeweils von einer ersten flachen Seite 1 des im Herstellen begriffenen Rahmens 10 her erfolgt, also in der in Fig. 11 dargestellten Situation von oben auf die Zeichnungsebene (oder: Papierebene) hinab.

Bei der Schweißvorrichtung 120 kann es sich insbesondere um ein WIG-, MIG- oder MAG-Schweißgerät handeln. Es kann ein Greifarm (oder mehrere Greifarme) vorgesehen sein, welcher bzw. welche die Rahmenteile 11-i für das Schweißgerät korrekt positionieren und ein Aufspannen S13 der Rahmenteile 11-i in Form des zu herzustellenden Rahmens 10 durchführen und/oder das Schweißgerät der Schweißvorrichtung 120 selbst kann robotergeführt sein. Das Schweißen S20 kann vorteilhaft erfolgen wie dies im Vorangehenden bereits ausführlich beschrieben wurde.

Als eine optionale dritte Station, zu welcher jede Sektion 142-i nach der zweiten Station geführt wird, kann eine optionale Vorbereitungsvorrichtung 125 angeordnet sein, welche beispielsweise zum Entladen und/oder Reinigen der gerade geschweißten Rahmen 10 eingerichtet sein kann.

Mittels einer weiteren Transportvorrichtung, hier in Form eines Roboterarms 144 dargestellt, wird danach der Rahmen 10 von dem Drehtisch 141 entfernt und einer Bearbeitungsvorrichtung 130 zugeführt, welche dazu eingerichtet ist, automatisiert die zweite flache Seite 2 des Rahmens 10 zu bearbeiten S30, welche von der ersten flachen Seite 1 abgewandt ist. Der Roboterarm 144 kann hierzu den Rahmen 10, welcher auf dem Drehtisch 141 auf der zweiten flachen Seite 2 lag, um von der ersten flachen Seite 1 her geschweißt werden zu können, auf der ersten flachen Seite 1 ablegen.

In der Ausführungsform gemäß Fig. 11 wird der Rahmen dazu auf einer weiteren Transportvorrichtung, hier einem Förderband 145, abgelegt, und durch dieses zu einer Bearbeitungsvorrichtung 130 des Systems 100 geführt. Die Bearbeitungsvorrichtung 130 umfasst bei der in Fig. 11 gezeigten Ausführungsform eine Schleifeinrichtung 131 (z.B. eine Schleifzelle oder eine Schleifmaschine), welche dazu eingerichtet ist, die von dem Förderband 145 abgewandte zweite flache Seite 2 des Rahmens 10 zu schleifen.

Für das Schleifen S31 können die Rahmen 10 auf einem Spannrahmen angeordnet und dort fixiert werden.

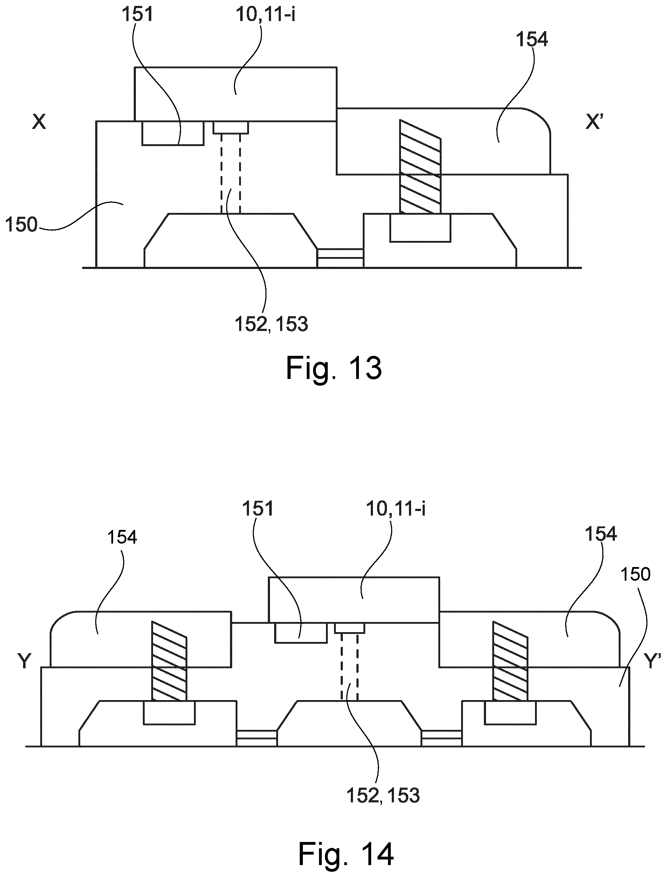

Fig. 12 zeigt eine schematische Draufsicht auf einen Rahmen 10 (hier nach der Ausführungsform aus Fig. 7), wie er auf einem Spannrahmen 150 fixiert ist. Fig. 13 und Fig. 14 zeigen schematische Querschnittsdarstellungen eines jeweiligen Rahmenteils 11-i und des Spannrahmens 150, jeweils in Ausschnitten, zur Erläuterung von vorteilhaften Merkmalen des Schleifens S31 und/oder der Bearbeitungsvorrichtung 130 sowie des optionalen Spannrahmens 150. Dabei ist Fig. 13 entlang der Schnittlinie X-X' in Fig. 12 genommen, und Fig. 14 entlang der Schnittlinie Y-Y' in Fig. 12.

Wie in Fig. 12 bis Fig. 14 gezeigt ist, kann der Rahmen 10 vor dem Schleifen S31 vorteilhaft auf einem Spannrahmen 150 angeordnet werden, etwa durch den Roboterarm 144. Ein temporäres Fixieren des Rahmens 10 auf dem Spannrahmen 150 kann beispielsweise durch eine magnetische Fixierungseinrichtung 151 erfolgen, wenn der für den Rahmen 10 verwendete Edelstahl magnetisch ist. Die magnetische Fixierungseinrichtung 151 kann im Wesentlichen über die gesamte Länge jedes Rahmenteils 11-i vorgesehen sein, oder, wie in Fig. 12 schematisch durch gestrichelte Kästchen angedeutet, jeweils an Kreuzungs- und/oder Eckpunkten des Rahmens 10 angeordnet sein.

Alternativ oder zusätzlich zu der magnetischen Fixierungseinrichtung 151 kann eine Fixierung mittels einer Vakuum-Fixierungseinrichtung 152 erfolgen, also über Ansauglöcher 153 in einer Bodenfläche des Spannrahmens 41, auf welcher der Rahmen 10 aufliegt, wobei die Ansauglöcher 153 mittels einer Vakuumpumpe (nicht dargestellt) mit Vakuum (oder Unterdruck) beaufschlagt werden. Die Ansauglöcher 153, oder Ansaugschlitze, sind vorteilhaft in der Mitte der Rahmenteile 11-i angeordnet, genauer gesagt, in der Mitte des Bereichs des Spannrahmens 150, auf welchem jeweils Rahmenteile 11-i aufliegen, wenn der Rahmen 10 auf den Spannrahmen 150 gelegt wurde.

Der Spannrahmen 150 kann, einseitig (siehe Fig. 13) oder beidseitig (Fig. 14) jedes Rahmenteils 11-i dazu parallel ausgebildete und angeordnete Verschleißteile 154 aufweisen. Diese Verschleißteile 154 können etwa, wie gezeigt, mit Schrauben an dem Spannrahmen 150 fixierbar oder fixiert sein. Die Verschleißteile 154 dienen dazu, den Spannrahmen 150 vor dem Schleifen S31 zu beschützen. Sobald diese zu einem gewissen Grad abgeschliffen sind, können sie einfach ausgetauscht werden. Die Verschleißteile 154 können beispielsweise aus einem Stahl, insbesondere auch einem Stahl niedrigerer Güte als die des Edelstahlbands 30, gefertigt sein. Die Verschleißteile 154 können Langlöcher aufweisen, um flexibel an dem Spannrahmen 150 befestigbar zu sein.

Die Variante aus Fig. 13 oder die Variante aus Fig. 14 können jeweils ausgewählt werden, darauf basierend, aus welcher Richtung ein Schleifmittel dem Rahmenteil 11-i genähert wird. Insbesondere kann der Spannrahmen 150 des Systems 100 an den Bereichen für zwei Rahmenteile 11-i ein Verschleißteil 154 aufweisen, wie in Fig. 13, und an zwei anderen Bereichen für die zwei anderen Rahmenteile 11-i zwei Verschleißteile 154 aufweisen, wie in Fig. 14 gezeigt. Die nur einseitige Anordnung von Verschleißteilen 154 reduziert das Risiko, dass sich der Rahmen 10 und/oder der Spannrahmen 150 während des Schleifens S31 verdreht bzw. verdrehen.

Eine solche Ausführungsform ist in Fig. 12 dargestellt, wo der Spannrahmen 150 dazu ausgebildet ist, sich während des Schleifens S31 mit einer Geschwindigkeit v nach rechts im Bild zu bewegen (oder alternativ in der Gegenrichtung, nach links). Der Spannrahmen 150 (auch als "Hilfswerkzeug" oder "Hilfstooling" bezeichenbar) kann beispielsweise auf ein Transportband 145, 148 aufgelegt werden und dort zum Beispiel durch ein angelegtes Vakuum angesaugt werden.

Wie bereits mehrfach erwähnt wurde, kann die Bearbeitungsvorrichtung 130 alternativ oder zusätzlich auch zum Ausbilden S32 mindestens einer optischen Schweißnaht-Tarnmarkierung 13-i ausgebildet sein. Demnach kann statt, vor, oder (bevorzugt) nach der Schleifeinrichtung 131 der Bearbeitungsvorrichtung 130 noch eine Laserbeschriftungseinrichtung 132 der Bearbeitungsvorrichtung 130 vorgesehen sein.

Die Laserbeschriftungseinrichtung 132 kann als ein Laser ausgebildet sein, welcher für ein Laserannealing und/oder Laserabtrag an/von der zweiten flachen Seite 2 eingerichtet ist, beispielsweise nachdem diese durch die Schleifeinrichtung 131 geschliffen wurde, wie in Fig. 11 angedeutet.

Nach der Bearbeitung S30 durch die Bearbeitungsvorrichtung 130 kann der bearbeitete Rahmen 10 durch eine weitere Transportvorrichtung, hier wieder einen Roboterarm 146 umfassend, optional noch einer Folierungsvorrichtung 148 zugeführt werden. Beispielsweise kann der Roboterarm 146 dazu eingerichtet sein, den Rahmen 10 auf einem Förderband 147 abzulegen, welches den Rahmen 10 zu der Folierungsvorrichtung 148 befördert. Dementsprechend kann auch das erfindungsgemäße Verfahren einen Schritt des Folierens des bearbeiteten Rahmens 10 umfassen.

### Bezugszeichenliste

- 1: erste flache Seite / Unterseite
- 2: zweite flache Seite / Oberseite
- 3: Schweißnahtoberseite
- 4: Schweißwurzel
- 5: Trichterkopfstruktur
- 6: Trichterhalsstruktur
- 9: Fenster
- 10: Rahmen
- 11-i: Rahmenteil
- 12-i: Schweißnaht
- 13-i: Schweißnaht-Tarnmarkierung
- 20: Glaskeramikkochfeld
- 30: Edelstahlband
- 100: System
- 110: Schneidevorrichtung
- 120: thermische Schweißvorrichtung
- 125: Vorbereitungsvorrichtung
- 130: Bearbeitungsvorrichtung
- 131: Schleifeinrichtung
- 132: Laserbeschriftungseinrichtung
- 141: Drehtisch
- 142-i: Drehtisch-Sektion
- 143: Sektions-Drehtisch
- 144: Roboterarm
- 145: Förderband
- 146: Roboterarm
- 147: Förderband
- 148: Folierungsvorrichtung
- 150: Spannrahmen
- 151: magnetische Fixierungseinrichtung
- 152: Vakkum-Fixierungseinrichtung
- 153: Ansaugloch
- 154: Verschleißteil
- 160: Steuervorrichtung

- α: Winkel
- B: Schweißnahtwurzelbreite
- S10..S40: Verfahrensschritte
- v: Fördergeschwindigkeit des Spannrahmens
- X-X': Schnittlinie
- Y-Y': Schnittlinie

## Patentansprüche

1. Verfahren zum Herstellen eines Rahmens (10) aus einem Edelstahl, umfassend zumindest die Schritte:
Bereitstellen (S10) einer Anzahl von separaten Rahmenteilen (11-i) aus dem Edelstahl;
Verschweißen (S20) der separaten Rahmenteile (11-i) zu dem Rahmen (10) mit insgesamt mindestens zwei Schweißnähten (12-i), wobei das Verschweißen (S20) jeweils mittels eines thermischen Schweißverfahrens, insbesondere Laserschweißen, und jeweils von einer ersten flachen Seite (1) des im Herstellen begriffenen Rahmens (10) her erfolgt; und
Bearbeiten (S30) der ersten flachen Seite (1) und/oder einer zweiten flachen Seite (2) des Rahmens (10), welche von der ersten flachen Seite (1) abgewandt ist,
wobei das Bearbeiten (S30) zumindest ein Schleifen (S31) des Rahmens (10) an der entsprechenden flachen Seite (1, 2) und/oder ein Ausbilden (S32) mindestens einer optischen Schweißnaht-Tarnmarkierung (13-i) an mindestens einer der Schweißnähte (12-i) umfasst.

2. Verfahren nach Anspruch 1,
wobei es zumindest die zweite flache Seite (2) ist, an welcher das Bearbeiten (S30) durchgeführt wird.

3. Verfahren nach Anspruch 1 oder 2,
wobei das Verschweißen (S20) zumindest auch mit einem Laserstrahl oder einer Kombination von Laserstrahlen erfolgt, bei dem oder bei denen eine entlang der Schweißnahtbreite (B) der Schweißnähte (12-i) unterschiedliche Intensitätsverteilung und/oder Wärmeeinwirkung erfolgt.

4. Verfahren nach Anspruch 3, wobei eine durchschnittliche Flächenleistungsdichte des Laserstrahls oder der Kombination von Laserstrahlen in den inneren 30%, radial oder bezogen auf eine Breite, mindestens um den Faktor 1,2 größer ist als eine durchschnittliche Flächenleistungsdichte des Laserstrahls oder der Kombination von Laserstrahlen in den äußeren 30%, radial oder bezogen auf die Breite.

5. Verfahren nach einem der Ansprüche 1 bis 4,
wobei das Verschweißen (S20) der Rahmenteile (11-i) mit einem Kern-Ring-Laser, mit einem Spot-im-Spot-Laser, oder mit einer sequentiellen Fahrt von zwei Lasern mit verschiedenen Fokusdurchmessern erfolgt.

6. Verfahren nach einem der Ansprüche 1 bis 5,
wobei das Ausbilden (S30) der mindestens einen optischen Schweißnaht-Tarnmarkierung (13-i) vorzugsweise jeweils an den Schweißwurzeln (4) aller Schweißnähte (12-i) erfolgt, besonders bevorzugt jeweils über mindestens 80% einer Schweißwurzelbreite (B) der jeweiligen Schweißwurzel (4).

7. Verfahren nach einem der Ansprüche 1 bis 6,
wobei das Anbringen (S32) der optischen Schweißnaht-Tarnmarkierungen (13-i) durch eine Laserbeschriftungsmethode, bevorzugt durch Laserannealing oder Laserabtrag, auf der, entsprechenden, insbesondere zuvor geschliffenen flachen Seite (1, 2) des Rahmens (10) erfolgt.

8. Verfahren nach einem der Ansprüche 1 bis 7,
wobei die Rahmenteile (11-i) jeweils zwei Schweißkanten aufweisen, an denen sie mit jeweils anderen Rahmenteilen (11-i) durch die Schweißnähte (12-i) zu verbinden sind, und wobei die Schweißkanten jeweils als gerade Linien oder als Kurvenlinien ausgebildet sind.

9. Verfahren nach einem der Ansprüche 1 bis 8,
wobei das Bereitstellen (S10) der Rahmenteile (11-i) zumindest die Schritte umfasst:
- Abhaspeln (S11) eines Edelstahlbands von einer Edelstahlbandhaspel;
- Schneiden (S12), insbesondere Laserschneiden, des abgehaspelten Edelstahlbands, um die Rahmenteile (11-i) herzustellen.

10. Verfahren nach Anspruch 9,
wobei zumindest ein Abschnitt des Edelstahlbands mit einem Materialnutzungsgrad von über 75%, insbesondere über 80%, bevorzugt über 90%, ausschließlich in eine Mehrzahl der Rahmenteile (11-i) geschnitten wird.

11. Verfahren nach einem der Ansprüche 1 bis 10, ferner umfassend:
Aufspannen (S13) der separaten Rahmenteile (11-i) in Form des herzustellenden Rahmens (10);
wobei das Verschweißen (S20) an den aufgespannten separaten Rahmenteilen (11-i) erfolgt.

12. Rahmen (10) aus Edelstahl, umfassend eine Anzahl von separaten Rahmenteilen (11-i), die zu dem Rahmen (10) an mindestens zwei Schweißnähten (12-i) zusammengeschweißt sind, wobei die Schweißnahtoberseiten (3) der Schweißnähte (12-i) alle an einer ersten flachen Seite (1) des Rahmens (10) angeordnet sind und alle Schweißwurzeln (4) der Schweißnähte (12-i) sich bis zu einer zweiten flachen Seite (2) des Rahmens (10) erstrecken, welche von der ersten flachen Seite (1) abgewandt ist,
wobei die erste und/oder die zweite flache Seite (1, 2) geschliffen ist und/oder
wobei an mindestens einer Schweißnaht (12-i) an der ersten und/oder zweiten flachen Seite (2) mindestens eine optische Schweißnaht-Tarnmarkierung (13-i) ausgebildet ist.

13. Elektrisches Gerät (20) mit einem Rahmen (10) nach Anspruch 12, wobei diejenige flache Seite (2) des Rahmens (10), welche geschliffen ist und/oder an welcher die mindestens eine Schweißnaht-Tarnmarkierung (13-i) ausgebildet ist, als Sichtseite an einer im Gebrauch des Geräts (20) sichtbaren Außenseite des Geräts (20) angeordnet ist.

14. Elektrisches Gerät nach Anspruch 13, wobei es sich um einen Fernseher, um ein Kochfeld, welches durch den Rahmen eingerahmt ist, oder um ein Haushaltsgerät, insbesondere mit einem Garraum, handelt, bei dem der Rahmen als Frontrahmen fungiert.

15. Automobil, umfassend einen Rahmen nach Anspruch 12, insbesondere als Dekorleiste und/oder als Kühlergrillrahmen.

16. System (100) zum Herstellen eines Rahmens (10), umfassend:
eine Schneidevorrichtung (110), welche dazu eingerichtet ist, ein Metallband aus einem Edelstahl zu erhalten und daraus automatisiert eine Anzahl von separaten Rahmenteilen (11-i) zu schneiden;
eine thermische Schweißvorrichtung (120), welche dazu eingerichtet ist, die separaten Rahmenteile (11-i) mit insgesamt mindestens zwei Schweißnähten (12-i) automatisiert zu dem Rahmen (10) zu verschweißen (S20), wobei das Verschweißen (S20) jeweils von einer ersten flachen Seite (1) des im Herstellen begriffenen Rahmens (10) her erfolgt;
eine Bearbeitungsvorrichtung (130), welche dazu eingerichtet ist, automatisiert die erste flache Seite (1) und/oder eine zweite flache Seite (2) des Rahmens (10) zu bearbeiten (S30), welche von der ersten flachen Seite (1) abgewandt ist,
wobei das Bearbeiten (S30) zumindest ein Schleifen (S31) des Rahmens (10) an der entsprechenden flachen Seite (1, 2) mittels einer Schleifeinrichtung (131) der
Bearbeitungsvorrichtung (130) und/oder ein Ausbilden (S32) mindestens einer optischen Schweißnaht-Tarnmarkierung (13-i) an mindestens einer der Schweißnähte (12-i) mittels einer Laserbeschriftungseinrichtung (132) der Bearbeitungsvorrichtung (130) umfasst; und
Transportvorrichtungen (141, 143, 144, 145, 146, 147) zum automatisierten Transportieren der separaten Rahmenteile (11-i) sowie des verschweißten Rahmens (10) zumindest zwischen der Schneidevorrichtung (110), der Schweißvorrichtung (120), und der Bearbeitungsvorrichtung (130).
